# FASCICULE DE BREVET EUROPEEN

(11) **EP 1 155 070 B1**
(45) Date de publication et mention de la délivrance du brevet: **11.09.2002**
(21) Numéro de dépôt: 00909230.5
(22) Date de dépôt: 22.02.2000
(51) Int. Cl.: C08K 3/22, C08K 5/3492, C08K 3/00, C08K 13/02

(54) **COMPOSITION POLYAMIDE IGNIFUGEE**
FLAMMGEHEMMTE POLYAMID-ZUSAMMENSETZUNG
FLAMEPROOF POLYAMIDE COMPOSITION

(30) Priorité: 24.02.1999 FR 9902525
(43) Date de publication de la demande: 21.11.2001
(73) Titulaire: Rhodia Engineering Plastics Srl, 20020 Ceriano Laghetto (MI) (IT)
(72) Inventeur: GALLI, Daniele, I-22066 Mariano Comense (IT); SPERONI, Franco, I-20020 Ceriano Laghetto (IT)
(74) Mandataire: Esson, Jean-Pierre
(86) Numéro de dépôt international: EP0001436
(87) Numéro de publication internationale: WO00050505

(56) Documents cités:
- EP-A- 0 156 196
- WO-A-96/09344
- WO-A-98/07778
- FR-A- 1 468 064

## Description

La présente invention concerne une composition polyamide ignifugée notamment utilisable pour la fabrication d'articles moulés.

Elle concerne plus particulièrement une composition polyamide ignifugée par un système ignifugeant sans halogène ni phosphore.

Les compositions à base de résine polyamide sont utilisées pour la réalisation d'articles par différents procédés de mise en forme désignés par le terme générique "moulage". Ces articles sont utilisés dans de nombreux domaines techniques. Parmi ceux-ci la réalisation de pièces de systèmes électriques ou électroniques est une application importante requérant des propriétés particulières. Ainsi, ces pièces doivent présenter des propriétés mécaniques élevées mais également des propriétés de résistance chimique, d'isolation électrique et surtout une résistance au feu élevée.

L'ignifugation des compositions à base de résine polyamide a été étudiée depuis très longtemps. Ainsi, les ignifugeants principaux utilisés sont le phosphore rouge et, des composés halogénés tels que le dibromophénol, les polybromodiphényles, les polybromodiphénoxydes, les et le polystyrènes bromés. Depuis une vingtaine d'années, une nouvelle classe d'ignifugation a été trouvée, à savoir, des composés organiques azotés appartenant à la classe des triazines telles que la mélamine ou ses dérivés comme le cyanurate de mélamine et plus récemment les phosphates, polyphosphates et pyrophosphates de mélamine.

L'avantage de cette dernière classe d'ignifugeants réside dans le fait que les composés concernés ne contiennent pas d'halogènes ni de phosphore libre. En effet, les ignifugeants contenant des halogènes ou du phosphore rouge peuvent générer des gaz ou vapeurs toxiques lors de la combustion de la composition polyamide. Les quantités de composés de melamine nécessaires pour obtenir une ignifugation satisfaisante sont très élevées, notamment pour les compositions contenant des charges de renfort sous forme de fibres telles que les fibres de verre, les fibres minérales ou les fibres organiques thermostables. Le coût de ces compositions dû aux fortes quantités de composé de mélamine rend leur commercialisation peu interessante. De plus cette concentration élevée en composé de mélamine présente certains inconvénients notamment pendant la fabrication de la composition, tels que la production de vapeur des composés mélaminés, ou pendant la production des articles moulés, tels que l'obstructions des conduits de ventilation et des dépôts dans les moules.

Les compositions comprenant des composés de la mélamine peuvent présenter de bonnes propriétés d'ignifugation, toutefois ces compositions présentent une mauvaise résistance au cheminement de l'arc électrique. Ceci rend problématique leur utilisation pour la réalisation d'articles pour le domaine de l'électricité.

La présente invention a notamment pour objectif de remédier à ces inconvénients en proposant un nouveau système d'ignifugation à base de composés de mélamine avec une teneur en composé de mélamine relativement faible, et qui présente une bonne résistance au cheminement de l'arc, par exemple supérieure à 300V.

A cet effet, l'invention propose une composition à base de polyamide comprenant un système d'ignifugation caractérisée en ce que ce système d'ignifugation contient un dérivé de mélamine et un composé du molybdène.

Selon une autre caractéristique de l'invention, la concentration pondérale en dérivé de mélamine est comprise entre 1 et 30 % en poids par rapport au poids total de la composition à base de polyamide, et avantageusement entre 10 et 20 % en poids.

Selon encore une autre caractéristique la concentration pondérale en composé du molybdène est inférieure à 15 % en poids par rapport au poids total de la composition, de préférence inférieure ou égale à 10%.

Les composés du molybdène préférés pour la mise en oeuvre de l'invention sont choisis parmi le trioxyde de molybdène, l'octamolybdate d'ammonium, le disulfure de molybdène.

Selon un mode de réalisation préféré de l'invention, les compositions ignifugées contiennent un polymère de type élastomère pouvant contribuer à une amélioration de la résistance au choc. Il n'y a pas de limitation au type d'élastomère pouvant être utilisé. Notamment tous les élastomères connus pour le renfort de la résistance au choc des polyamides peuvent être utilisés. Des exemples d'élastomères convenables sont les éthylène-ester acrylique-anhydride maléïque, les ethylène-propylène-anhydride maléïque, les EPDM (ethylène-propylène-diène momonère) avec éventuellement un anhydride maléïque greffé. La concentration pondérale en élastomère est avantageusement inférieure à 20%, de préférence inférieure à 5%.

Selon une autre caractéristique de l'invention, le système ignifugeant comprend un composé comprenant au moins une fonction acide carboxylique et présentant une tension de vapeur faible aux températures de mélange avec la matrice polymérique notamment pendant le procédé de fabrication du mélange, par exemple à des températures comprises entre 200°C environ et 350°c environ. Comme exemples d'acides carboxyliques convenables, on peut citer les acides monocarboxyliques, tels que l'acide miristique, l'acide palmitique, l'acide stéarique, l'acide béhénique, l'acide benzoïque, l'acide salicylique et généralement les acides monocarboxyliques comprenant un nombre d'atomes de carbone supérieur à 10, les acides dicarboxyliques tels que l'acide oxalique, l'acide malonique, l'acide succinique, l'acide glutarique, l'acide adipique, l'acide pymélique, l'acide decanedioïque, l'acide dodécanedioïque, l'acide isophtalique, l'acide téréphtalique, ou polycarboxyliques tels que l'acide trimésique. Ce composé, par une action de diminution des longueurs de chaîne du polyamide quand celui-ci est fondu par la flamme, provoque des formations de gouttes de faible dimension donc présentant un rapport élevé surface/masse. Ainsi, la température de ces gouttes diminuera très rapidement et elles ne pourront plus enflammer les éléments avec lesquels elles rentrent en contact.

Avantageusement, l'acide mono-, di ou polycarboxylique est présent à une concentration pondérale comprise entre 0,01 % et 3 % par rapport à la résine polyamide, de préférence comprise entre 0,05 % et 1%.

Le polyamide est choisi dans le groupe comprenant les polyamides obtenus par polycondensation d'un diacide carboxylique linéaire avec une diamine linéaire ou cyclique comme le PA 6.6., PA.6.10, PA 6.12, PA 12.12, PA 4.6, MXD 6 ou entre un diacide carboxylique aromatique et une diamine linéaire ou aromatique comme les polytéréphtalamides, polyisophtalamides, polyaramides, les polyamides obtenus par polycondensation d'un aminoacide sur lui-même, l'amino-acide pouvant être généré par l'ouverture hydrolytique d'un cycle lactame tels que, par exemple PA 6, PA 7, PA 11, PA 12. Le procédé de l'invention est également convenable pour traiter les copolyamides dérivés notamment des polyamides ci-dessus, ou les mélanges de ces polyamides ou copolyamides.

Les polyamides préférés sont le polyhexaméthylène adipamide, le polycaprolactame, ou les copolymères et mélanges entre le polyhexaméthylène adipamide et le polycaprolactame.

Les composés ou dérivés de mélamine convenables pour l'invention sont choisis dans le groupe comprenant le cyanurate de mélamine décrit dans les brevets japonais JP-A-53/51250, JP-A-54/118454 ou JP-A-54/16565, les phosphates et polyphosphates de mélamine décrits dans le brevets wo 9609344. Le composé utilisé de préférence pour la réalisation des compositions selon l'invention est le polyphosphate de mélamine. Sa concentration pondérale est avantageusement inférieure à 25% par rapport au poids total de la composition, de préférence inférieure à 20%.

Selon une autre caractéristique de l'invention, la composition comprend des charges de renfort choisies dans le groupe comprenant des fibres de verre, fibres minérales, par exemple la wollastonite, fibres céramiques, fibres organiques thermorésistantes comme les fibres en polyphtalamide, charges minérales telles que le kaolin.

La concentration pondérale des charges de renfort est comprise avantageusement entre 1 % et 50 % en poids par rapport au poids total de la composition, de préférence entre 15 et 50%.

Les compositions de l'invention peuvent comprendre tous les additifs habituellement utilisés dans les compositions à base de polyamide utilisées pour la fabrication d'articles moulés. Ainsi, on peut citer à titre d'exemple d'additifs les stabilisants thermiques, les stabilisants U.V., les antioxydants, les lubrifiants, les pigments, colorants, plastifiants ou des agents modifiant la résilience.

A titre d'exemple, les antioxydants et stabilisants chaleur sont, par exemple, des halogénures d'alcalins, des halogénures de cuivre, les composés phénoliques stériquement encombrés, les amines aromatiques.

Les stabilisants U.V. sont généralement des benzotriazoles, des benzophénones ou des HALS.

Les compositions de l'invention sont obtenues par mélange des différents constituants généralement dans une extrudeuse mono ou bivis, à une température suffisante pour maintenir la résine polyamide en milieu fondu. Généralement, le mélange obtenu est extrudé sous forme de joncs qui sont coupés en morceaux pour former des granulés.

L'addition des additifs ou du système ignifugeant peut être réalisée par ajout de ces composés dans le polyamide fondu sous forme pure ou sous forme de mélange concentré dans une résine telle que par exemple une résine polyamide.

Les granulés obtenus sont utilisés comme matière première pour alimenter les procédés de fabrication d'articles moulés tels que les procédés d'injection, d'extrusion, d'extrusion-soufflage.

Ainsi, la composition de l'invention convient particulièrement pour la fabrication d'articles utilisés dans le domaine de la connectique électrique ou électronique tels que éléments de disjoncteurs, interrupteurs, connecteurs ou analogues.

Les propriétés des compositions de l'invention sont déterminées sur des éprouvettes, selon les méthodes suivantes :
- Résistance à la flamme - test UL-94 selon la procédure des "Underwriters Laboratories" Ce test est réalisé avec des éprouvettes d'épaisseur de 3,2, 1,6 mm et 0,8 mm.
   Le résultat est codifié comme suit :
   → N.C.: non classé (ignifugation faible)
   → V-2 : le temps moyen de combustion est inférieur à 25 secondes (auto-extinction), goutte de polyamide enflammant le coton
   → V-1 : temps moyen de combustion inférieur à 25 secondes (auto-extinction), pas d'inflammation du coton par la goutte
   → V-0 : temps moyen de combustion inférieur à 5 secondes (auto-extinction), pas d'inflammation du coton
- Résistance au fil incandescent mesurée selon la norme IEC 695-2-1 sur des éprouvettes d'épaisseur 3,0 mm ; 1,6 mm et 1 mm.

Les propriétés mécaniques sont déterminées selon les méthodes suivantes :
- résistance à la traction selon la norme ISO R 527 après conditionnement de l'éprouvette à 23°C et une humidité relative de 50 %
- allongement à la rupture selon la norme ISO 527
- module selon la norme ISO 527
- résistance aux chocs IZOD selon la norme ISO 179/leU
- résistance aux chocs CHARPY selon la norme ISO 179/leA
- résistance à la propagation de l'arc électrique selon la norme IEC 112

L'invention est illustrée par les exemples ci-dessous donnés uniquement à titre indicatif et sans effet limitant sur la portée de l'invention.

Différentes compositions ont été fabriquées par mélange de polyamide avec un polyphosphate de mélamine, du trioxyde de molybdène et des fibres de verre.

Le mélange est réalisé dans une extrudeuse monovis à une température de 250°C. Le mélange est extrudé sous forme de joncs pour former des granulés par coupe de ces granulés.

Les matériaux utilisés sont :
- Polyamide A :: polyhexaméthylène adipamide (PA 6.6) commercialisé sous le nom commercial "Tecnonylon27 A 00"
- Composé de mélamine B :: Polyphosphate de mélamine commercialisé sous le nom commercial "MELAPUR 200"
- Trioxyde de molybdène C :: Molybdenum trioxyde MFR commercialisé par CLYMAX MOLYBDENUM USA.
- Fibres de verre D :: fibres de verre de diamètre 10 µm, sous forme de "chopped strands" commercialisées sous le nom commercial "FV-R123"
- Elastomère: E LOTADER 3210 commercialisé par Elf Atochem
F EXXELOR VA 1801 commercialisé par Exxon Chemicals.

La concentration en pourcentage pondéral de chaque composant et les propriétés mécaniques et d'ignifugation de chaque composition sont indiquées dans le tableau ci-dessous :

| Exemple | 1 | 2 | 3 | 4 | 5 | 6 |
|---|---|---|---|---|---|---|
| A | 50 | 55 | 50 | 43 | 43 | 45 |
| B | 25 | 20 | 20 | 25 | 25 | 20 |
| C | 0 | 0 | 5 | 5 | 5 | 10 |
| D | 25 | 25 | 25 | 25 | 25 | 25 |
| E | 0 | 0 | 0 | 2 | 0 | 0 |
| F | 0 | 0 | 0 | 0 | 2 | 0 |
| Résistance aux chocs Charpy entaillés KJ/m² | 4.1 | 4.6 | 5.3 | 5,3 | 5.1 | 5.6 |
| Résistance aux chocs Charpy entaillés KJ/m² | 32.9 | 40 | 42 | 40 | 41 | 13.7 |
| Résistance à la traction | 133.5 | 140 | 156 | 149 | 154 | 102.7 |
| Allongement à la rupture % | 1.9 | 2.3 | 1.7 | 1,6 | 1.7 | 0.9 |
| Module Mpa | 11258 | 10735 | 11930 | 11700 | 12150 | 13543 |
| Test UL-94 3.2/1.6/0.8 mm | V0/V0/V1 | V0/V1/NC* | V0/V0/V0 | V0/V0/V1 | V0/V0/V1 | V0/V0/V1 |
| Test au filament incandescent à 3/1.6/1 mm | 960/960/960 | 960/960/960 | 960/960/960 | 960/960/960 | 960/960/960 | 960/960/960 |
| Test de résistance à la propagation de l'arc | <300V | non mesuré | >400V | >400V | >350 | >400V |

| | | | | | | |
|---|---|---|---|---|---|---|
| (*) Non Classable | | | | | | |

Ces essais montrent que la présence de trioxyde de molybdène permet de diminuer la quantité de mélamine tout en gardant des propriétés d'ignifugation satisfaisantes, et d'obtenir des compositions présentant une bonne résistance au cheminement de l'arc.

## Revendications

1. Composition à base de polyamide comprenant un système d'ignifugation **caractérisée en ce que** ledit système d'ignifugation contient un dérivé de mélamine et un composé du molybdène.

2. Composition selon la revendication 1, **caractérisée en ce que** la concentration pondérale en dérivé de mélamine est compris entre 1 et 30 % en poids par rapport au poids total de la composition.

3. Composition selon la revendication 1 ou 2, **caractérisée en ce que** la concentration pondérale en composé du molybdène est inférieure à 15 % en poids par rapport au poids de la composition.

4. Composition selon la revendication 3 **caractérisée en ce que** la concentration pondérale en composé du molybdène est inférieure à 10% en poids par rapport au poids de la composition.

5. Composition selon l'une des revendications précédentes **caractérisée en ce que** le composé du molybdène est choisi parmi le trioxyde de molybdène, l'octamolybdate d'ammonium ou le disulfure de molybdène.

6. Composition selon l'une des revendications 1 à 5, **caractérisée en ce que** le dérivé de mélamine est choisi dans le groupe comprenant le cyanurate de mélamine, le phosphate de mélamine, les polyphosphates ou pyrophosphates de mélamine.

7. Composition selon la revendication 6, **caractérisée en ce que** le dérivé de mélamine est le polyphosphate de mélamine.

8. Composition selon la revendication 7, **caractérisée en ce que** la concentration pondérale en polyphosphate de mélamine est inférieure à 25% par rapport au poids de la composition.

9. Composition selon l'une des revendications précédentes, **caractérisée en ce qu'**elle comprend une charge de renfort choisie dans le groupe comportant les fibres de verre, fibres minérales, fibres organiques résistantes à la chaleur.

10. Composition selon l'une des revendications précédentes, caratérisée en ce qu'elle comprend un élastomère.

11. Composition selon l'une des revendications précédentes, **caractérisée en ce que** le système ignifugeant comprend un acide mono, di ou polycarboxylique.

12. Composition selon la revendication 11, **caractérisée en ce que** l'acide mono, di ou polycarboxylique est présent à une concentration pondérale comprise entre 0,01 % et 3 % par rapport à la résine polyamide.

13. Composition selon la revendication 11 ou 12, **caractérisée en ce que** l'acide précité est choisi dans le groupe comprenant l'acide miristique, l'acide palmitique, l'acide stéarique, l'acide béhénique, l'acide benzoïque, l'acide salicylique, l'acide oxalique, l'acide malonique, l'acide succinique, l'acide glutarique, l'acide adipique, l'acide pymélique, l'acide decanedioïque, l'acide dodécanedioïque, l'acide isophtalique, l'acide téréphtalique, l'acide trimésique.

14. Article obtenu par moulage, mise en forme d'une composition selon l'une des revendications 1 à 13.

## Patentansprüche

1. Zusammensetzung auf Polyamidbasis, umfassend ein Flammschutzsystem, **dadurch gekennzeichnet, daß** das Flammschutzsystem ein Melaminderivat und eine Molybdänverbindung enthält.

2. Zusammensetzung nach Anspruch 1, **dadurch gekennzeichnet, daß** die Gewichtskonzentration an Melaminderivat zwischen 1 und 30 Gew.-%, bezogen auf das Gesamtgewicht der Zusammensetzung, beträgt.

3. Zusammensetzung nach Anspruch 1 oder 2, **dadurch gekennzeichnet, daß** die Gewichtskonzentration an Molybdänverbindung niedriger als 15 Gew.-%, bezogen auf das Gewicht der Zusammensetzung, ist.

4. Zusammensetzung nach Anspruch 3, **dadurch gekennzeichnet, daß** die Gewichtskonzentration an Molybdänverbindung niedriger als 10 Gew.-%, bezogen auf das Gewicht der Zusammensetzung, ist.

5. Zusammensetzung nach einem der vorhergehenden Ansprüche, **dadurch gekennzeichnet, daß** die Molybdänverbindung unter Molybdäntrioxid, Ammoniumoctamolybdat oder Molybdändisulfid ausgewählt ist.

6. Zusammensetzung nach einem der Ansprüche 1 bis 5, **dadurch gekennzeichnet, daß** das Melaminderivat aus der Gruppe, umfassend Melamincyanurat, Melaminphosphat, die Polyphosphate oder Pyrophosphate des Melamins, ausgewählt ist.

7. Zusammensetzung nach Anspruch 6, **dadurch gekennzeichnet, daß** das Melaminderivat Melaminpolyphosphat ist.

8. Zusammensetzung nach Anspruch 7, **dadurch gekennzeichnet, daß** die Gewichtskonzentration an Melaminpolyphosphat niedriger als 25%, bezogen auf das Gewicht der Zusammensetzung, ist.

9. Zusammensetzung nach einem der vorhergehenden Ansprüche, **dadurch gekennzeichnet, daß** sie einen Verstärkungsfüllstoff umfaßt, ausgewählt aus der Gruppe der Glasfasern, mineralischen Fasern, organischen Fasern, welche wärmebeständig sind.

10. Zusammensetzung nach einem der vorhergehenden Ansprüche, **dadurch gekennzeichnet, daß** sie ein Elastomeres umfaßt.

11. Zusammensetzung nach einem der vorhergehenden Ansprüche, **dadurch gekennzeichnet, daß** das Flammschutzsystem eine Mono-, Di- oder Polycarbonsäure umfaßt.

12. Zusammensetzung nach Anspruch 11, **dadurch gekennzeichnet, daß** die Mono-, Di- oder Polycarbonsäure in einer Gewichtskonzentration zwischen 0,01 und 3%, bezogen auf das Polyamidharz, vorhanden ist.

13. Zusammensetzung nach Anspruch 11 oder 12, **dadurch gekennzeichnet, daß** die vorstehend genannte Säure aus der Gruppe ausgewählt ist, bestehend aus Myristinsäure, Palmitinsäure, Stearinsäure, Behensäure, Benzoesäure, Salicylsäure, Oxalsäure, Malonsäure, Bernsteinsäure, Glutarsäure, Adipinsäure, Pimelinsäure, Decandisäure, Dodecandisäure, Isophthalsäure, Terephthalsäure, Trimesinsäure.

14. Durch Formung erhaltenes Erzeugnis, geformt aus einer Zusammensetzung gemäß einem der Ansprüche 1 bis 13.

## Claims

1. Polyamide-based composition comprising a fire-retardation system, **characterized in that** the said fire-retardation system contains a melamine derivative and a molybdenum compound.

2. Composition according to Claim 1, **characterized in that** the weight concentration of melamine derivative is between 1 and 30% by weight with respect to the total weight of the composition.

3. Composition according to Claim 1 or 2, **characterized in that** the weight concentration of molybdenum compound is less than 15% by weight with respect to the weight of the composition.

4. Composition according to Claim 3, **characterized in that** the weight concentration of molybdenum compound is less than 10% by weight with respect to the weight of the composition.

5. Composition according to one of the preceding claims, **characterized in that** the molybdenum compound is chosen from molybdenum trioxide, ammonium octamolybdate and molybdenum disulphide.

6. Composition according to one of Claims 1 to 5, **characterized in that** the melamine derivative is chosen from the group comprising melamine cyanurate, melamine phosphate and melamine polyphosphates or pyrophosphates.

7. Composition according to Claim 6, **characterized in that** the melamine derivative is melamine polyphosphate.

8. Composition according to Claim 7, **characterized in that** the weight concentration of melamine polyphosphate is less than 25% with respect to the weight of the composition.

9. Composition according to one of the preceding claims, **characterized in that** it contains a reinforcing filler chosen from the group comprising glass fibres, mineral fibres and heat-resistant organic fibres.

10. Composition according to one of the preceding claims, **characterized in that** it contains an elastomer.

11. Composition according to one of the preceding claims, **characterized in that** the fire-retardant system contains a mono-, di- or polycarboxylic acid.

12. Composition according to Claim 11, **characterized in that** the mono-, di- or polycarboxylic acid is present in a weight concentration of between 0.01% and 3% with respect to the polyamide resin.

13. Composition according to Claim 11 or 12, **characterized in that** the aforementioned acid is chosen from the group comprising myristic acid, palmitic acid, stearic acid, behenic acid, benzoic acid, salicylic acid, oxalic acid, malonic acid, succinic acid, glutaric acid, adipic acid, pimelic acid, decanedioic acid, dodecanedioic acid, isophthalic acid, terephthalic acid and trimesic acid.

14. Article obtained by moulding or forming a composition according to one of Claims 1 to 13.
